# EUROPEAN PATENT APPLICATION

(11) **EP 4 738 493 A1**
(43) Date of publication of application: **06.05.2026**
(21) Application number: 23955351.4
(22) Date of filing: 19.12.2023
(51) Int. Cl.: H01M 10/04

(54) **LAYING AND ATTACHING ASSEMBLY, ADHESIVE ATTACHING METHOD, AND BATTERY PRODUCTION LINE**

(30) Priority: 08.10.2023 CN 202311289754
(71) Applicant: Contemporary Amperex Technology Co., Limited, Ningde, Fujian 352100 (CN)
(72) Inventor: WU, Kai, Ningde, Fujian 352100 (CN); CHEN, Jingxian, Ningde, Fujian 352100 (CN); LI, Yang, Ningde, Fujian 352100 (CN); CHEN, Wentao, Ningde, Fujian 352100 (CN); QIU, Leigang, Ningde, Fujian 352100 (CN); LIAO, Shunlin, Ningde, Fujian 352100 (CN)
(74) Representative: Ran, Handong
(86) International application number: PCT/CN2023/139933
(87) International publication number: WO 2025/077013

(57) **Abstract**

A laying and attaching assembly, an adhesive attaching method, and a battery production line. The laying and attaching assembly comprises a transfer unit (1), lifting devices (2) and laying and attaching devices (3). The lifting devices (2) are arranged on the transfer unit (1), the transfer unit (1) being used for driving the lifting devices (2) to move, and a plurality of the lifting devices (2) being provided. The laying and attaching devices (3) are used for vacuum-fixing adhesive sheets (300), each lifting device (2) being correspondingly provided with a laying and attaching device (3), and each lifting device (2) being used for driving the corresponding laying and attaching device (3) to ascend and descend. The transfer unit (1) drives the lifting devices (2) to move so as to adjust the position of the adhesive sheets (300) vacuum-fixed to the laying and attaching devices (3), and the lifting devices (2) drive the corresponding laying and attaching devices (3) to ascend and descend so as to vacuum-fix corresponding adhesive sheets (300), such that the distance between the adhesive sheets (300) vacuum-fixed to the laying and attaching devices (3) can be regulated, thereby better implementing adhesive attaching to surfaces of both single-row grouped battery cells and double-row grouped battery cells.

## Description

### CROSS-REFERENCE TO RELATED APPLICATIONS

The present invention claims priority to Chinese Patent Application 202311289754.9, entitled "LAYING AND APPLYING ASSEMBLY, ADHESIVE APPLYING METHOD, AND BATTERY

PRODUCTION LINE" filed on October 8, 2023, which is incorporated by reference in the present invention. **TECHNICAL FIELD**

The present invention relates to the technical field of battery production, and specifically relates to a laying and applying assembly, an adhesive applying method, and a battery production line.

### BACKGROUND

New energy batteries are more and more widely used in life and industry, for example, new energy automobiles equipped with batteries have been widely used, and batteries are increasingly used in the field of energy storage.

In related technologies, it is needed to apply adhesive to surfaces of grouped battery cells, so that a plurality of grouped battery cells can be bonded to be battery modules. Laying and applying assemblies are difficult to implement adhesive applying to surfaces of both single-row grouped battery cells and double-row grouped battery cells.

### SUMMARY

In order to solve above technical problems, the present invention provides a laying and applying assembly, an adhesive applying method, and a battery production line, aiming at better implementing adhesive applying to surfaces of both single-row grouped battery cells and double-row grouped battery cells.

The present invention is implemented by the following technical solution.

In a first aspect, the embodiment of the present invention provides a laying and applying assembly, which includes:
a transfer device;
lifting apparatuses arranged on the transfer device, the transfer device being configured to drive the lifting apparatuses to move, and a plurality of lifting apparatuses being provided; and
laying and applying apparatuses configured to adsorb adhesive sheets, each lifting apparatus being correspondingly provided with a laying and applying apparatus, and each lifting apparatus being configured to drive the corresponding laying and applying apparatus to lift up and down.

In the embodiment of the present invention, the transfer device drives the corresponding lifting apparatus to move so as to adjust the position of each laying and applying apparatus, and the plurality of lifting apparatuses independently drive the corresponding laying and applying apparatuses to lift up and down so as to adjust the spacing between adhesive sheets adsorbed by the plurality of the laying and applying apparatuses, thereby better implementing adhesive applying to surfaces of both single-row grouped battery cells and double-row grouped battery cells by the laying and applying assembly.

In one embodiment, the laying and applying apparatuses are located at bottom portions of the corresponding lifting apparatuses.

In the embodiment of the present invention, the interference between corresponding negative pressure connecting pipes and parts above the laying and applying apparatuses can be reduced through the position arrangement of the laying and applying apparatuses.

In one embodiment, each laying and applying apparatus includes:
an airflow distributor having a plurality of air chambers and air pumping connectors, the plurality of air chambers being isolated from one another, and each air chamber communicating with the corresponding air pumping connector; and
a suction assembly which is connected to the airflow distributor and is provided with an adsorption portion configured to adsorb the adhesive sheet, the adsorption portion being located on the side, deviating from the airflow distributor, of the suction assembly, and each air chamber communicating with the corresponding adsorption portion.

In the embodiment of the present invention, the corresponding air chambers are sucked into negative pressure so as to adapt to the adsorption of adhesive sheets with different sizes and specifications. For the adhesive sheet with a small size, part of the air chambers are sucked into negative pressure, so that the laying and applying apparatuses can adsorb the adhesive sheet, and the energy consumption can be reduced.

In one embodiment, the air pumping connectors are located on outer side surfaces of the airflow distributors, and the arrangement directions of the airflow distributors and the suction assemblies are crossed with the orientations of the air pumping connectors.

In the embodiment of the present invention, the position and orientation arrangement of the air pumping connectors is beneficial to reducing the interference between the corresponding negative pressure connecting pipes and the parts on the side, deviating from the suction assemblies, of the airflow distributors.

In one embodiment, each air chamber communicates with at least two air pumping connectors in different orientations.

In the embodiment of the present invention, the at least two air pumping connectors in different orientations can make the negative pressure implemented by sucking the corresponding air chambers uniform.

In one embodiment, one of air chambers is an edge air chamber, and the edge air chamber includes a first sub-chamber and a second sub-chamber which are in communication with each other; the first sub-chamber extends in a first direction, the second sub-chamber extends in a second direction, the first direction and the second direction are arranged in a crossed mode; the first direction and the second direction are both arranged in a mode of crossing with the arrangement directions of the airflow distributors and the suction assemblies; the air pumping connector communicating with the first sub-chamber is a first air pumping connector, and the first air pumping connector is located at the end, deviating from the second sub-chamber in the first direction, of the first sub-chamber; the air pumping connector communicating with the second sub-chamber is a second air pumping connector, and the second air pumping connector is located at the end, deviating from the first sub-chamber in the second direction, of the second sub-chamber.

In the embodiment of the present invention, a suction force for the suction assemblies to adsorb the adhesive sheets is small, so the airflow distributors and the suction assemblies of the laying and applying apparatuses can be properly manufactured to be small relative to the adhesive sheets; a depth of the first sub-chamber in the first direction and the depth of the second sub-chamber in the second direction are small, a negative pressure suction force at the end, deviating from the first air pumping connector in the first direction, of the first sub-chamber can still basically meet the suction force requirement for adsorbing the adhesive sheets, and the negative pressure suction force at the end, deviating from the second air pumping connector in the second direction, of the second sub-chamber can still basically meet the suction force requirement for adsorbing the adhesive sheets. A large space can be reserved between the first sub-chamber and the second sub-chamber which extend in a crossed mode in two different directions so as to arrange other air chambers, and thus the other air chambers can be approximately surrounded between the first sub-chamber and the second sub-chamber.

In one embodiment, in all the air chambers, the air chambers except the edge air chamber are auxiliary air chambers; the auxiliary air chambers are located on the side, facing the second air pumping connector, of the first sub-chamber; and the auxiliary air chambers are located on the side, facing the first air pumping connector, of the second sub-chamber.

In the embodiment of the present invention, the air pumping connectors corresponding to auxiliary air chambers are all located on the side, facing the auxiliary air chambers, of the edge air chamber, and the side, deviating from the auxiliary air chambers, of the edge air chamber is not provided with the air pumping connectors, so that the structures of the airflow distributors are simplified.

In one embodiment of the present invention, at least two auxiliary air chambers are provided, one of the auxiliary air chambers is a first auxiliary air chamber, and the other auxiliary air chamber is a second auxiliary air chamber; the second auxiliary air chamber is located on the side, deviating from the edge air chamber, of the first auxiliary air chamber; and the first auxiliary air chamber crosses the side of the second auxiliary air chamber in the first direction and the side of the second auxiliary air chamber in the second direction.

In the embodiment of the present invention, the first auxiliary air chamber and the second auxiliary air chamber are not shielded from each other, even if each air chamber communicates with the at least two air pumping connectors in different directions, the first auxiliary air chamber and the second auxiliary air chamber cannot be stacked in a vertical direction, that is, a projection area of the first auxiliary air chamber in a vertical direction does not coincide with the projection area of the second auxiliary air chamber in the vertical direction, and therefore, the structures of the airflow distributors can be simplified.

In one embodiment, the suction assemblies include:
suction nozzles installed on the airflow distributor, each air chamber communicating with the corresponding suction nozzle, and the adsorption portions being formed on the suction nozzles; and
protective blocks which are connected to the sides, facing the suction nozzles, of the airflow distributors and are provided with avoiding holes, the avoiding holes penetrating through the protective blocks, the suction nozzles being arranged in the avoiding holes in a penetrating mode, and the suction nozzles partially protruding out of the sides, deviating from the airflow distributors, of the protective blocks.

In the embodiment of the present invention, the protective blocks can block a lateral external impact so as to protect the suction nozzles in the avoiding holes, thereby reducing the influence of the lateral external impact on the suction nozzles, facilitating the suction nozzles to stably adsorb the adhesive sheets.

In a second aspect, the embodiment of the present invention provides an adhesive applying method, which includes:
if any laying and applying apparatus does not adsorb an adhesive sheet when separating from the adhesive sheet on a preparation table, driving a lifting apparatus to move through a transfer device, so as to move the laying and applying apparatus which does not adsorb the adhesive sheet to a pre-adsorption position above the adhesive sheet on the preparation table;
driving the laying and applying apparatus to move downwards by the corresponding lifting apparatus, so as to move the laying and applying apparatus from the pre-adsorption position to the adsorption position of the adhesive sheet on the preparation table;
when any laying and applying apparatus is located at the adsorption position, adsorbing the adhesive sheet by the laying and applying apparatus;
driving the laying and applying apparatus which adsorbs the adhesive sheet at the adsorption position to move upwards to the pre-adsorption position by the corresponding lifting apparatus; and
moving the adhesive sheet adsorbed by the laying and applying apparatus to a surface of an object to be adhered by the transfer device for laying and applying.

In the embodiment of the present invention, the transfer device drives the corresponding lifting apparatus to move so as to adjust the position of each laying and applying apparatus, and the plurality of lifting apparatuses independently drive the corresponding laying and applying apparatuses to lift up and down so as to adjust the spacing between adhesive sheets adsorbed by the plurality of the laying and applying apparatuses, thereby better implementing adhesive applying to surfaces of both single-row grouped battery cells and double-row grouped battery cells by the laying and applying assembly.

In one embodiment, the when any laying and applying apparatus is located at the adsorption position, adsorbing the adhesive sheet by the laying and applying apparatus includes:
when any laying and applying apparatus is located at the adsorption position, sucking a corresponding air chamber of the laying and applying apparatus into negative pressure by an air pumping connector of the corresponding laying and applying apparatus, so as to make a suction assembly of the corresponding laying and applying apparatus adsorb adhesive sheets with different sizes and specifications.

In the embodiment of the present invention, the corresponding air chambers are sucked into negative pressure so as to adapt to the adsorption of adhesive sheets with different sizes and specifications. For the adhesive sheet with a small size, part of the air chambers are sucked into negative pressure, so that the laying and applying apparatuses can adsorb the adhesive sheet, and the energy consumption can be reduced.

In a third aspect, the embodiment of the present invention provides an adhesive applying method, which includes:
according to a size of an adhesive sheet on a preparation table and a position of the adhesive sheet on the preparation table relative to the preparation table, generating a motion trail of each laying and applying apparatus;
if any laying and applying apparatus does not adsorb the adhesive sheet when separating from the adhesive sheet on the preparation table, selecting the laying and applying apparatus to be adsorbed with the adhesive sheet as a target laying and applying apparatus;
transmitting a first moving instruction according to the motion trail corresponding to the target laying and applying apparatus, the first moving instruction being used for controlling a transfer device to drive a lifting apparatus to drive the target laying and applying apparatus to move, so as to move the target laying and applying apparatus to a pre-adsorption position above the adhesive sheet on the preparation table;
when the target laying and applying apparatus is located at the pre-adsorption position, transmitting a second moving instruction, the second moving instruction being used for controlling the corresponding lifting apparatus to drive the target laying and applying apparatus to move, so as to move the target laying and applying apparatus from the pre-adsorption position to an adsorption position of the adhesive sheet on the preparation table;
when the target laying and applying apparatus is at the adsorption position, transmitting an adhesive sheet adsorption instruction, the adhesive sheet adsorption instruction being used for controlling the target laying and applying apparatus at the adsorption position to adsorb the adhesive sheet;
when the target laying and applying apparatus at the adsorption position adsorbs the adhesive sheet, transmitting a lift-up instruction, the lift-up instruction being used for controlling the corresponding lifting apparatus to drive the target laying and applying apparatus to move from the adsorption position to the pre-adsorption position; and
transmitting a third moving instruction according to the position of the laying and applying apparatus relative to an object to be adhered, the third moving instruction being used for controlling the transfer device to drive the lifting apparatus to move the laying and applying apparatus which is adsorbed with the adhesive sheet, so as to move the adhesive sheet adsorbed by the laying and applying apparatus to the surface of the object to be adhered for laying and applying.

In the embodiment of the present invention, different laying and applying apparatuses have different motion trails, so that the spacing between adhesive sheets is adjusted; and the target laying and applying apparatus is driven to lift by the corresponding lifting apparatus to adsorb the corresponding adhesive sheets, thereby better adhering the adhesive sheets corresponding to both the single-row grouped battery cells and double-row grouped battery cells.

In one embodiment, the when the target laying and applying apparatus is at the adsorption position, transmitting an adhesive sheet adsorption instruction, the adhesive sheet adsorption instruction being used for controlling the target laying and applying apparatus at the adsorption position to adsorb the adhesive sheet includes:
according to the size of the adhesive sheet and the position of the adhesive sheet relative to the target laying and applying apparatus, selecting an air chamber to be sucked into negative pressure from all air chambers; and
when the target laying and applying apparatus is at the adsorption position, transmitting the adhesive sheet adsorption instruction according to the selected air chamber to be sucked into the negative pressure, so as to drive the laying and applying assembly to suck the air chamber corresponding to the laying and applying apparatus into the negative pressure through the air pumping connector of the laying and applying apparatus according to the adhesive sheet adsorption instruction.

In the embodiment of the present invention, the corresponding air chambers are sucked into negative pressure so as to adapt to the adsorption of adhesive sheets with different sizes and specifications. For the adhesive sheet with a small size, part of the air chambers are sucked into negative pressure, so that the laying and applying apparatuses can adsorb the adhesive sheet, and the energy consumption can be reduced.

In a fourth aspect, the embodiment of the present invention provides a battery production line, which includes:
any abovementioned laying and applying assembly;
a preparation table configured to store adhesive sheets to be applied, the laying and applying apparatus being configured to adsorb the adhesive sheets on the preparation table; and
a conveying apparatus, configured to convey grouped battery cells, a transfer device driving a lifting apparatus to move to drive a laying and applying apparatus to apply the adsorbed adhesive sheets to the battery cells on the conveying apparatus.

### Effects

According to the embodiments of the present invention, a plurality of lifting apparatuses are arranged, each lifting apparatus is correspondingly provided with the laying and applying apparatus, and each lifting apparatus can drive the corresponding laying and applying apparatus to lift and down. When the grouped battery cells are the single-row grouped battery cells, the transfer device can drive the lifting apparatuses to move to corresponding positions, the corresponding lifting apparatus will drive the corresponding laying and applying apparatus to move downwards to adsorb one adhesive sheet on the preparation table, the corresponding lifting apparatus will drive the laying and applying apparatus which is adsorbed with the adhesive sheet to lift up, a rotating device will drive the lifting apparatus corresponding to the laying and applying apparatus which do not adsorb the adhesive sheet to move to another corresponding position, and the corresponding lifting apparatus will drive the corresponding laying and applying apparatus to move downwards to adsorb another adhesive sheet on the preparation table, therefore, the spacing between the two adsorbed adhesive sheets meets the spacing requirement on the adhesive sheets corresponding to the single-row grouped battery cells. When the grouped battery cells are the double-row grouped battery cells, the transfer device will drive the lifting apparatuses to move to corresponding positions, the corresponding lifting apparatus will drive the corresponding laying and applying apparatus to move downwards to adsorb one adhesive sheet on the preparation table, the corresponding lifting apparatus will drive the laying and applying apparatus which is adsorbed with the adhesive sheet to lift up, the rotating device will drive the lifting apparatus corresponding to the laying and applying apparatuses which do not adsorb the adhesive sheet to move to another corresponding position, and the corresponding lifting apparatus will drive the corresponding laying and applying apparatus to move downwards to adsorb another adhesive sheet on the preparation table, and therefore, the spacing between the two adsorbed adhesive sheets meets the spacing requirement on the adhesive sheets corresponding to the double-row grouped battery cells. Because the lifting apparatuses can drive corresponding laying and applying apparatuses to lift up and down respectively, after the corresponding laying and applying apparatus is lifted up and down to adsorb a first adhesive sheet, the rotating device drives the lifting apparatus to move to adjust the spacing between the adhesive sheet to be adsorbed and the adsorbed adhesive sheet, thus the spacing between the two adhesive sheets meets the spacing requirement on the adhesive sheets corresponding to grouped battery cells, and then the corresponding laying and applying apparatus is lifted up and down to adsorb the adhesive sheet to be adsorbed with the adjusted spacing. Therefore, the adhesive sheets required by both the single-row grouped battery cells and double-row grouped battery cells can be adsorbed from the preparation table by the laying and applying assembly according to a proper spacing, thereby better implementing adhesive applying to surfaces of both the single-row grouped battery cells and double-row grouped battery cells.

### BRIEF DESCRIPTION OF THE DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present invention. Moreover, in all of the drawings, the same components are indicated by the same reference numerals. In the accompanying drawings:
FIG. 1 is an arrangement diagram of a laying and applying assembly, a preparation table and a conveying apparatus according to the embodiments of the present invention;
FIG. 2 is an arrangement diagram of adhesive sheets on a preparation table according to the embodiments of the present invention, and two groups of adhesive sheets with different spacing are shown in the diagram;
FIG. 3 is a schematic structural diagram of a laying and applying assembly according to the embodiments of the present invention, and lifting apparatuses in the diagram are partially shielded by a transfer device;
FIG. 4 is a schematic structural diagram of a laying and applying assembly, and a transfer device in the diagram does not shield lifting apparatuses;
FIG. 5 is an enlarged view of a part A in FIG. 4;
FIG. 6 is an assembly diagram of a lifting apparatus and a laying and applying apparatus according to the embodiments of the present invention;
FIG. 7 is a cross-sectional view of a part B-B in FIG. 6;
FIG. 8 is the cross-sectional view of a part C-C in FIG. 6;
FIG. 9 is a flowchart of an adhesive applying method according to an embodiment of the present invention, execution steps of a laying and applying assembly in an adhesive applying process are shown in the flowchart, and specific adsorption steps are not shown in the flowchart;
FIG. 10 is a flowchart of an adhesive applying method according to an embodiment of the present invention, execution steps of a laying and applying assembly in an adhesive applying process are shown in the flowchart, and specific adsorption steps are not shown in the flowchart;
FIG. 11 is a flowchart of an adhesive applying method according to an embodiment of the present invention, and a complete adhesive application process executed by a laying and applying assembly is shown in the flowchart;
FIG. 12 is a flowchart of an adhesive applying method according to an embodiment of the present invention, execution steps of an adhesive applying process are shown in the flowchart, and specific adsorption steps are not shown in the flowchart;
FIG. 13 is a flowchart of an adhesive applying method according to an embodiment of the present invention, execution steps of an adhesive applying process are shown in the flowchart, and specific adsorption steps are not shown in the flowchart;
FIG. 14 is a flowchart of an adhesive applying method according to an embodiment of the present invention, and a complete adhesive application process is shown in the flowchart.

### Reference numerals

1: transfer device; 2: lifting apparatus; 21: lifter; 22: mounting bracket; 3: laying and applying apparatus; 31: airflow distributor; 3111: edge air chamber; 31111: first sub-chamber; 31112: second sub-chamber; 3112: first auxiliary air chamber; 3113: second auxiliary air chamber; 3121: first air pumping connector; 3122: second air pumping connector; 3133: third air pumping connector; 32: suction assembly; 321: adsorption portion; 322: suction nozzle; 323: protective block; 3231: avoiding hole; 100: conveying apparatus; 200: preparation table; and 300: adhesive sheet.

### DETAILED DESCRIPTION

Embodiments of the technical solutions of the present invention will be described in detail below in conjunction with the drawings. The following embodiments are only used to illustrate the technical solutions of the present invention more clearly, and are therefore used only as examples, and should not be used to limit the protection scope of the present invention.

Unless otherwise defined, all technical and scientific terms used herein have the same meanings as commonly understood by those skilled in the art in the present invention. The terms used herein are intended only for the purpose of describing specific embodiments and are not intended to limit the present invention. The terms "including" and "having" and any variants thereof in the embodiments of the present invention are intended to cover non-exclusive inclusion.

In the description of the embodiments of the present invention, the technical terms "first", "second", "third", and the like are only used for distinguishing different objects, and cannot be understood as indicating or implying a relative importance or implicitly specifying the number, particular order, or primary and secondary relation of the technical features indicated. In the description of the embodiments of the present invention, "a plurality of" means two or more, unless otherwise explicitly and specifically defined.

The reference to "embodiments" herein means that specific features, structures or characteristics described in combination with the embodiments may be included in at least one embodiment of the present invention. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present invention, the term "and/or" is only an association relationship for describing associated objects, indicating that three relationships may exist. For example, A and/or B may indicate three situations: A exists alone, both A and B exist, and B exists alone. In addition, the character "/" herein generally means that the associated objects before and after it are in an "or" relationship.

In the description of the embodiments of the present invention, unless otherwise explicitly specified and defined, the technical terms such as "mount", "connect", "connection", and "fix" should be understood in a broad sense. For example, the connection may be a fixed connection, a detachable connection, or an integrated connection, may be a mechanical connection or an electrical connection, or may be a direct connection, an indirect connection through an intermediate, an internal communication between two elements, or an interaction relationship between two elements. For those of ordinary skill in the art, the specific meanings of the above terms in the embodiments of the present invention can be understood according to specific situations.

In the description of the embodiments of the present invention, unless otherwise expressly specified or qualified, the technical term "contact" shall be understood broadly, may refer to a direct contact, or a contact through an intermediate media layer, or a contact that is between two parts in contact and is substantially free of interacting force, or a contact that is between two parts in contact and has an interacting force.

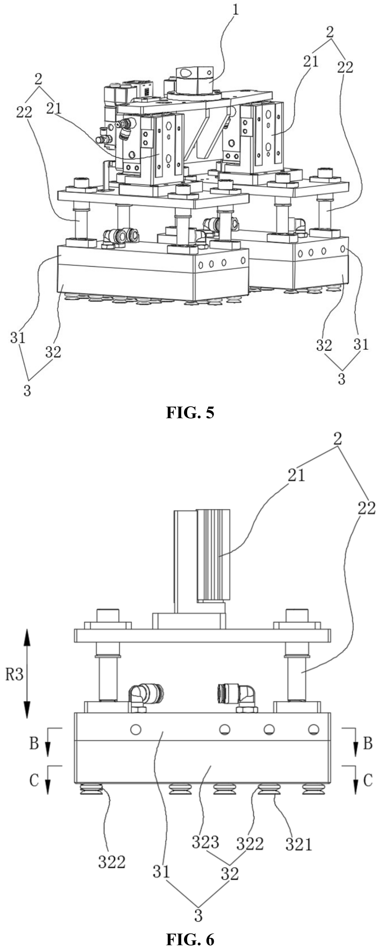

In the description of the embodiments of the present invention, the "upper", "lower", "top" and "bottom" orientations or positional relationships are based on the orientations or positional relationships shown in FIG. 6. It is to be understood that these orientation terms are only for convenience of description of the present invention and for simplifying the description, and do not indicate or imply that the apparatus or element referred to must have a particular orientation, be constructed and operated in a particular orientation, and therefore cannot be construed as limiting the present invention.

In the embodiments of the present invention, with reference to FIG. 6, a vertical direction is a direction indicated by an arrow R3 in the figure.

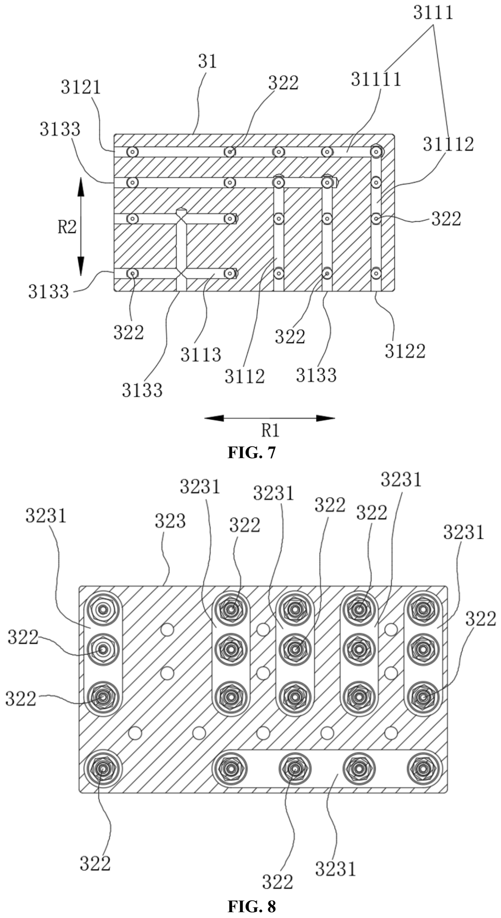

In the embodiments of the present invention, with reference to FIG. 7, a first direction is a direction indicated by an arrow R1 in the figure.

In the embodiments of the present invention, with reference to FIG. 7, a second direction is a direction indicated by an arrow R2 in the figure.

Currently, new energy batteries are widely used in daily life and industry. New energy batteries are not only applied in energy storage power source systems such as water, fire, wind, and solar power stations, but also widely applied in electric transportation tools, such as electric bicycles, electric motorcycles, and electric vehicles, as well as many fields, such as military equipment and aerospace. With the continuous expansion of the application field of power batteries, the demand in the market is also constantly expanding.

As part of the inventive concept of the present invention, before describing the embodiments of the present invention, it is needed to analyze the reasons of difficultly implementing adhesive applying to surfaces of both single-row grouped battery cells and double-row grouped battery cells in the related technology; and the technical solution in the embodiments of the present invention are obtained by reasonable analysis.

In the related technology, a laying and applying assembly adsorbs adhesive sheets on a preparation table and moves the adsorbed adhesive sheet to a surface of an object to be adhered for adhering. For example, two laying and applying apparatuses of the laying and applying assembly adsorb two adhesive sheets on the preparation table and move to the surfaces of two grouped battery cells for adhering. The grouped battery cells are divided into the single-row grouped battery cells and the double-row grouped battery cells. The single-row grouped battery cells are two grouped battery cells without adhesive applied to small surfaces, while the double-row grouped battery cells are two grouped battery cells with adhesive applied to the small surfaces, thereby adhering the two battery cells together. It is needed to apply adhesive to large surfaces of the grouped battery cells so as to bond the grouped battery cells to be a module. The large surfaces of the two single-row grouped battery cells are applied with adhesive, thus a plurality of groups of single-row grouped battery cells can be adhered to be a single-row module. The large surfaces of the two double-row grouped battery cells are applied with adhesive, so that a plurality of groups of single-row grouped battery cells can be adhered to be a double-row module. The laying and applying assembly is mainly configured to apply adhesive to the large surfaces of the two grouped battery cells; however, the sizes of the adhesive sheets corresponding to the two single-row grouped battery cells are different from those corresponding to the two double-row grouped battery cells; the spacing between the two of the adhesive sheets corresponding to the single-row grouped battery cells is different from that of the two adhesive sheets corresponding to the double-row grouped battery cells, resulting in a significant spacing difference between the smaller adhesive sheets on the preparation table and the larger adhesive sheets. The two laying and applying apparatuses of the laying and applying assembly are lifted up and down together, and the two laying and applying apparatus can adsorb two adhesive sheets on the preparation table by once lifting up and down; the laying and applying assembly adsorbs the adhesive sheets according to the spacing between the two adhesive sheets on the preparation table, which makes it difficult to meet the spacing requirement on the adhesive sheets for the two grouped battery cells, and it is difficult to implement adhesive applying to both the single-row grouped battery cells and double-row grouped battery cells.

The laying and applying assembly is improved, and the two laying and applying apparatuses of the laying and applying assembly are independently lifted up and down; one laying and applying apparatus is lifted down to adsorb the adhesive sheet on the preparation table, the laying and applying apparatus which is adsorbed with the adhesive sheet is lifted up to return, the laying and applying apparatus which does not adsorb the adhesive sheet is adjusted to a corresponding position, and the corresponding laying and applying apparatus which does not adsorb the adhesive sheet is lifted down to adsorb the adhesive sheet; and through the position adjustment of the laying and applying apparatuses, the two adhesive sheets adsorbed by the two laying and applying apparatuses can meet the spacing requirements of the two grouped battery cells, thereby better implementing adhesive applying to both the single-row grouped battery cells and double-row grouped battery cells.

The solutions in the embodiments of the present invention can be applied not only to large-surface adhesive sheets 300 applied to the battery cells, but are also suitable for other objects requiring adhesive applied to the surfaces. A plurality of laying and applying apparatuses 3 are independently lifted up and down to adsorb at different locations on the preparation table 200, so that the spacing of the adsorbed adhesive sheets 300 on the two laying and applying apparatuses 3 meets the spacing of the adhesive sheets 300 on two grouped battery cells.

A plurality of battery cells can be provided, and the plurality of battery cells can be connected in series, parallel, or in series-parallel connection, and the series-parallel connection refers to that the plurality of battery cells are in both series and parallel connections. The plurality of battery cells can be directly connected in series, parallel, or in series-parallel connection, and then an entire unit formed by the plurality of battery cells can be placed inside a box. Definitely, the plurality of battery cells can first be connected to be battery modules either in series, parallel, or in series-parallel connection, and then a plurality of battery modules can be connected to form an entire unit either in series, parallel, or in series-parallel connection, and then an entire unit formed by the plurality of battery cells connected either in series, parallel, or in series-parallel connection can be placed inside the box. The battery pack can also include other structures, for example, the battery pack can also include busbar components for realizing electrical connection between the plurality of battery cells.

The battery cells refer to basic units that can implement mutual transformation between chemical energy into electrical energy.

In the embodiments of the present invention, the battery cells can be secondary batteries, which refer to battery cells that active materials can be activated by charging for continuous used after discharging.

In the embodiments of the present invention, the battery cells can be primary batteries, which can be discharged but cannot be recharged for repeated use.

In the embodiments of the present invention, the battery cells can be lithium-ion batteries, sodium-ion batteries, sodium-lithium-ion batteries, lithium-metal batteries, sodium-metal batteries, lithium-sulfur batteries, magnesium-ion batteries, nickel-hydrogen batteries, nickel-cadmium batteries, lead-acid batteries, etc., which are not limited in the embodiments of the present invention.

The adhesive sheets 300 can be adhered to the surfaces of the battery cells, and a plurality of battery cells with the adhesive sheets 300 adhered can be bonded together to form a battery module. By way of example, the adhesive sheets 300 adhered to the battery cells can serve as an insulating pad.

The battery cells can be prepared into the battery modules or battery packs, which supply power to electrical apparatuses.

The electrical apparatuses can be apparatuses that operate by consuming electrical energy to achieve corresponding functions. By way of example, the electrical apparatus may be, but is not limited to, a mobile phone, a tablet, a laptop, an electric toy, an electric tool, a battery vehicle, an electric vehicle, a ship, a spacecraft, and the like. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

The electrical apparatus in one embodiment of the present invention is a vehicle for illustration.

The vehicle provided by an embodiment of the present application may be a fuel vehicle, a gas vehicle, or a new-energy vehicle, and the new-energy vehicle may be an all-electric vehicle, a hybrid electric vehicle, an extended range electric vehicle, or the like. A battery pack is provided inside the vehicle, and the battery pack may be arranged at the bottom or head or tail of the vehicle. The battery pack may be used to supply power to the vehicle. For example, the battery pack may be used as an operating power source of the vehicle. The vehicle may further include a controller and a motor. The controller may be used to control the battery pack to supply power to the motor. For example, the battery pack may serve to satisfy the operating power demand when the vehicle is starting, navigating, and traveling.

In some embodiments of the present invention, the battery pack can be used as an operation power supply of the vehicle, can also be used as a driving power supply of the vehicle, and replaces or partially replaces fuel oil or natural gas to provide driving power for the vehicle. In some embodiments, the battery pack can be an energy storage apparatus.

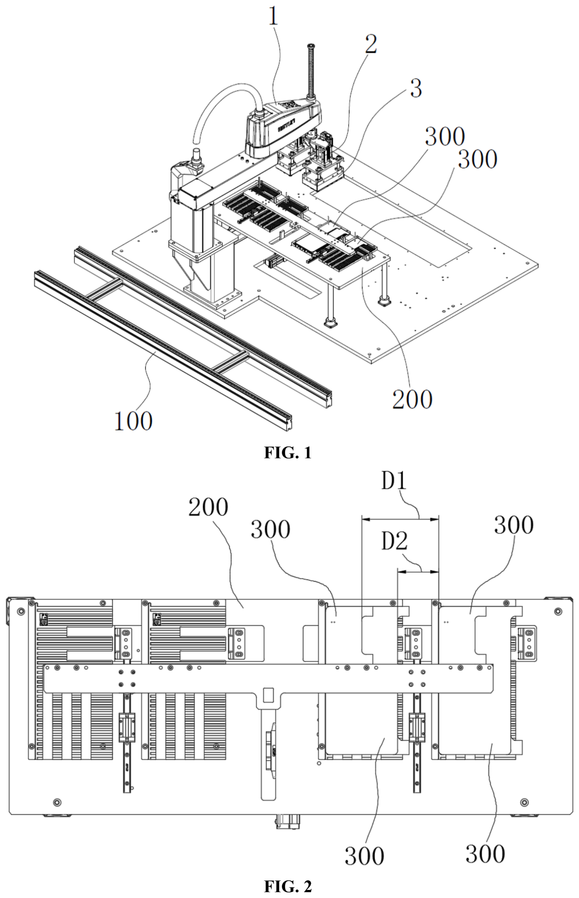

The embodiment of the present invention provides a battery production line, with reference to FIG. 1; the battery production line includes the laying and applying assembly, the preparation table 200 and a conveying apparatus 100. The preparation table 200 is configured to store the adhesive sheets 300 to be applied, and the laying and applying assembly is configured to adsorb the adhesive sheets 300 on the preparation table 200. The conveying apparatus 100 is configured to convey the grouped battery cells, and the laying and applying assembly adheres the adsorbed adhesive sheets 300 to the battery cells on the conveying apparatus 100.

The laying and applying assembly provided by the embodiment of the present invention, with reference to FIG. 1 and FIG. 3 to FIG. 5, includes a transfer device 1, lifting apparatuses 2 and laying and applying apparatuses 3. The lifting apparatuses 2 are arranged on the transfer device 1, the transfer device 1 being configured to drive the lifting apparatuses 2 to move, and a plurality of lifting apparatuses 2 being provided. The laying and applying apparatuses 3 are configured to adsorb the adhesive sheets 300, each lifting apparatus 2 being correspondingly provided with the laying and applying apparatus 3, and each lifting apparatus 2 being configured to drive the corresponding laying and applying apparatus 3 to lift up and down.

The transfer device 1 is configured to provide a driving force for driving, and the transfer device 1 drives the lifting apparatuses 2 to move to the laying and applying apparatuses 3 so as to transfer the adhesive sheets 300 on the preparation table 200 to the surface of an object to be adhered.

With reference to FIG. 1, the laying and applying apparatuses 3 are configured to adsorb the adhesive sheets 300 on the preparation table 200.

With reference to FIG. 1, the transfer device 1 drives the lifting apparatuses 2 to move to drive the laying and applying apparatuses 3 to adhere the adsorbed adhesive sheets 300 to the battery cells on the conveying apparatus 100.

By way of example, with reference to FIG. 1, the conveying apparatus 100 is located on one side of the transfer device 1, and the preparation table 200 is located on the other side of the transfer device 1.

By way of example, the object to be adhered can be two grouped battery cells.

By way of example, the object to be adhered can also be other objects except the grouped battery cells.

By way of example, the two grouped battery cells can be two single-row grouped battery cells or two double-row grouped battery cells.

By way of example, with reference to FIG. 1, the grouped battery cells are conveyed to the preset positions by the conveying apparatus 100 so that the adhesive sheets 300 can be laid and applied to the surfaces of the grouped battery cells.

By way of example, with reference to FIG. 1 and FIG. 2, the preparation table 200 is configured to store the adhesive sheets 300 to be applied.

By way of example, with reference to FIG. 2, the adhesive sheets 300 in the same batch stored on the preparation table 200 are consistent in size and specification. For example, the grouped battery cells on an assembly line are the single-row grouped battery cells, the sizes of the adhesive sheets 300 stored on the preparation table 200 correspond to those of the single-row grouped battery cells, and the adhesive sheets 300 stored on the preparation table 200 are consistent in size and dimension. For example, the grouped battery cells on the assembly line are the double-row grouped battery cells, the sizes of the adhesive sheets 300 stored on the preparation table 200 correspond to those of the double-row grouped battery cells, and the adhesive sheets 300 stored on the preparation table 200 are consistent in size and dimension. However, the spacing between the two adhesive sheets 300 stored on the preparation table 200 and corresponding to the single-row grouped battery cells is a first spacing, the spacing between the two adhesive sheets 300 stored on the preparation table 200 and corresponding to the double-row grouped battery cells is a second spacing, and there is a difference between the first spacing and the second spacing.

By way of example, with reference to FIG. 2, the first spacing is D1, the second spacing is D2, D1≠D2.

By way of example, with reference to FIG. 1, and FIG. 3 to FIG. 6, the lifting apparatuses 2 are configured to drive the corresponding laying and applying apparatuses 3 to lift up and down, and each laying and applying apparatus 3 is driven by the corresponding lifting apparatus 2 to lift up and down independently.

By way of example, the lifting apparatuses 2 can be air cylinders, oil cylinders or electric push rods and the like.

By way of example, with reference to FIG. 5, two lifting apparatuses 2 are provided, two laying and applying apparatuses 3 are provided, and the lifting apparatuses 2 and the laying and applying apparatuses 3 are in one-to-one correspondence.

By way of example, the number of the lifting apparatuses 2 and the number of the laying and applying apparatuses 3 can be both larger than two.

By way of example, with reference to FIG. 5 and FIG. 6, each lifting apparatus 2 includes a lifter 21 and a mounting bracket 22; the lifter 21 is arranged on the transfer device 1; the mounting bracket 22 is arranged on the lifter 21; each laying and applying apparatus 3 is connected to the mounting bracket 22; and the lifter 21 drives the mounting bracket 22 to lift. The mounting brackets 22 facilitates mounting of the laying and applying apparatuses 3.

The lifting apparatuses 2 are not limited to the structures of the lifters 21 and the mounting brackets 22. By way of example, the lifting apparatuses 2 can be not provided with the mounting brackets 22; the laying and applying apparatuses 3 are arranged on the lifters 21; and the lifters 21 drive the laying and applying apparatuses 3 to lift up and down.

According to the embodiments of the present invention, a plurality of lifting apparatuses 2 are arranged, each lifting apparatus 2 is correspondingly provided with the laying and applying apparatus 3, and each lifting apparatus 2 can drive the corresponding laying and applying apparatus 3 to lift up and down. When the grouped battery cells are the single-row grouped battery cells, the transfer device 1 can drive the lifting apparatuses 2 to move to corresponding positions, the corresponding lifting apparatus 2 will drive the corresponding laying and applying apparatus 3 to move downwards to adsorb one adhesive sheet 300 on the preparation table 200, the corresponding lifting apparatus 2 will drive the laying and applying apparatus 3 which is adsorbed with the adhesive sheet 300 to lift up, the rotating device will drive the lifting apparatus 2 corresponding to the laying and applying apparatus 3 which do not adsorb the adhesive sheet to move to another corresponding position, and the corresponding lifting apparatus 2 will drive the corresponding laying and applying apparatus 3 to move downwards to adsorb another adhesive sheet 300 on the preparation table 200, therefore, the spacing between the two adsorbed adhesive sheets 300 meets the spacing requirement on the adhesive sheets 300 corresponding to the single-row grouped battery cells. When the grouped battery cells are the double-row grouped battery cells, the transfer device 1 will drive the lifting apparatuses 2 to move to corresponding positions, the corresponding lifting apparatus 2 will drive the corresponding laying and applying apparatus 3 to move downwards to adsorb one adhesive sheet 300 on the preparation table 200, the corresponding lifting apparatus 2 will drive the laying and applying apparatus 3 which is adsorbed with the adhesive sheet 300 to lift up, the rotating device will drive the lifting apparatus 2 corresponding to the laying and applying apparatuses 3 which do not adsorb the adhesive sheet to move to another corresponding position, and the corresponding lifting apparatus 2 will drive the corresponding laying and applying apparatus 3 to move downwards to adsorb another adhesive sheet 300 on the preparation table 200, and therefore, the spacing between the two adsorbed adhesive sheets 300 meets the spacing requirement on the adhesive sheets 300 corresponding to the double-row grouped battery cells. Because the lifting apparatuses 2 can drive corresponding laying and applying apparatuses 3 to lift up and down respectively, after the corresponding laying and applying apparatus 3 is lifted up and down to adsorb a first adhesive sheet 300, the rotating device drives the lifting apparatus 2 to move to adjust the spacing between the adhesive sheet 300 to be adsorbed and the adsorbed adhesive sheet 300, thus the spacing between the two adhesive sheets 300 meets the spacing requirement on the adhesive sheets 300 corresponding to grouped battery cells, and then the corresponding laying and applying apparatus 3 is lifted up and down to adsorb the adhesive sheet 300 to be adsorbed with the adjusted spacing. Therefore, the adhesive sheets 300 required by the single-row grouped battery cells or the double-row grouped battery cells can be adsorbed from the preparation table 200 by the laying and applying assembly according to a proper spacing, thereby better implementing adhesive applying to surfaces of both the single-row grouped battery cells and double-row grouped battery cells by the laying and applying assembly.

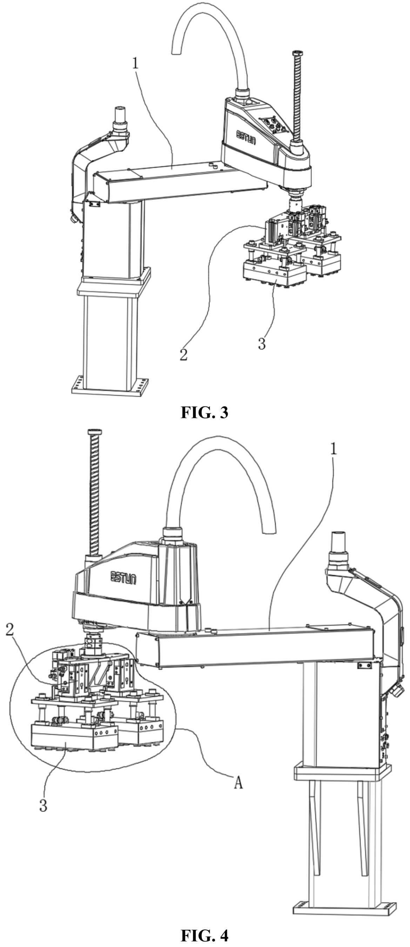

In one embodiment, with reference to FIG. 3 to FIG. 6, the laying and applying apparatuses 3 are located at bottom portions of the corresponding lifting apparatuses 2.

In the embodiment of the present invention, the laying and applying apparatuses 3 are located at the bottom portions of the lifting apparatuses 2, and the positions of the laying and applying apparatuses 3 in a vertical direction will be lower than the positions of the lifting apparatuses 2 in the vertical direction; when the laying and applying apparatuses 3 are in contact with the adhesive sheets 300 on the preparation table 200, the lifting apparatuses 2 and the preparation table 200 are spaced by a certain distance, thus the laying and applying apparatuses 3 can be in good contact with the adhesive sheets 300 on the preparation table 200, and moreover, the possibility that the lifting apparatuses 2 interfere with the preparation table 200 in the lifting process can be reduced. The laying and applying apparatuses 3 are located at the bottom portions of the lifting apparatuses 2, so that the degree of the laying and applying apparatuses 3 deflecting to the lifting apparatuses 2 in a direction perpendicular to the vertical direction can be relieved, the space occupation of the lifting apparatuses 2 and the laying and applying apparatuses 3 in the direction perpendicular to the vertical direction on the whole can be reduced, and the space is saved.

The laying and applying apparatuses 3 according to the embodiments of the present invention are not limited to be located at the bottom portions of the corresponding lifting apparatuses 2. By way of example, the laying and applying apparatuses 3 are located on side portions of the corresponding lifting apparatuses 2, that is, the laying and applying apparatuses 3 and the lifting apparatuses 2 are arranged in the direction perpendicular to the vertical direction.

In one embodiment, with reference to FIG. 5 and FIG. 6, each laying and applying apparatus 3 includes an airflow distributor 31 and a suction assembly 32. The airflow distributor 31 is provided with a plurality of air chambers and air pumping connectors, the plurality of air chambers are isolated from one another, and each air chamber communicates with the corresponding air pumping connector. The suction assemblies 32 are connected to the airflow distributors 31 and provided with adsorption portions 321 used for adsorbing the adhesive sheets 300, the adsorption portions 321 are located on the sides, deviating from the airflow distributors 31, of the suction assemblies 32, and each air chamber communicates with the corresponding adsorption portion 321.

The airflow distributors 31 mainly distribute negative pressure space through each air chamber, and therefore the isolated air chambers can be independently sucked into negative pressure.

In the embodiment of the present invention, the plurality of air chambers are isolated from one another, each air chamber communicates with the corresponding adsorption portion 321, any air chamber is sucked into negative pressure by the air pumping connector, and the corresponding adsorption portions 321 of the suction assemblies 32 can reach negative pressure for adsorbing the adhesive sheets 300. According to different sizes and specifications of the adhesive sheets 300, the corresponding air chambers are sucked into negative pressure, so that the adsorption portions 321 communicating with the corresponding air chambers can adsorb the adhesive sheets 300, and the rest air chambers in all the air chambers are not sucked into negative pressure. For the adhesive sheets 300 with smaller sizes, part of the air chambers are sucked into negative pressure, namely the adhesive sheets 300 can be adsorbed, so that the energy loss is reduced.

The laying and applying apparatuses 3 according to the embodiment of the present invention cannot be provided with the suction assemblies 32, and the adhesive sheets 300 are adsorbed through corresponding openings of the airflow distributors 31.

The airflow distributors 31 of the laying and applying apparatuses 3 according to the embodiment of the present invention are not limited to mutual isolation of the plurality of air chambers. The air chambers can be in communication with one another.

In one embodiment, with reference to FIG. 6 and FIG. 7, the air pumping connectors are positioned on outer side surfaces of the airflow distributors 31, and arrangement directions of the airflow distributors 31 and the suction assembly's 32 are crossed with the orientations of the air pumping connectors.

In the embodiment of the present invention, the air pumping connectors are needed to be connected to a negative pressure source by external pipelines, and the air pumping connectors are sucked through the negative pressure source, so that the corresponding air chambers are sucked into negative pressure. The air pumping connectors are positioned on the outer side surfaces of the airflow distributors 31, and the air pumping connectors face outwards, so that the pumping connectors can be conveniently connected to the corresponding external pipelines. The air pumping connectors are arranged in a manner of avoiding upper portions of the airflow distributors 31, thus the possibility of interference between the external pipelines corresponding to the air pumping connectors and parts above the airflow distributors 31 can be reduced.

By way of example, with reference to FIG. 6 and FIG. 7, the laying and applying apparatuses 3 are positioned at the bottom portions of the corresponding lifting apparatuses 2, and because the air pumping connectors are positioned on the outer side surfaces of the airflow distributors 31, the arrangement directions of the airflow distributors 31 and the suction assemblies 32 are crossed with the orientations of the air pumping connectors, and thus the possibility of interference between the external pipelines corresponding to the air pumping connectors and the lifting apparatuses 2 above can be reduced.

The positions and orientations of the air pumping connectors according to the embodiments of the present invention can be set according to actual needs.

In one embodiment, with reference to FIG. 7, each air chamber communicates with at least two air pumping connectors in different orientations.

In the embodiment of the present invention, the interiors of the air chambers are sucked by the air pumping connectors in different orientations, which makes the negative pressure generated at each position in the air chambers more uniform, and facilitates the suction assemblies 32 to uniformly adsorb the adhesive sheets 300.

The orientations of the air pumping connectors corresponding to the air chambers in the embodiments of the present invention are not limited. By way of example, the orientations of the plurality of air pumping connectors of each air chamber can be the same. By way of example, each air chamber can correspond to one air pumping connector.

It is to be understood that the laying and applying apparatuses 3 adsorb the adhesive sheets 300 on the preparation table 200 and apply the adhesive sheets 300 to the surfaces of the objects to be adhered. The adhesive sheets 300 adsorbed by the laying and applying apparatuses 3 are transferred to the surfaces of the objects to be adhered, the adhesive sheets 300 adsorbed by the laying and applying apparatuses 3 are prevented from a tearing force applied by tearing off release paper, the adsorption force of the laying and applying apparatuses 3 on the adhesive sheet 300 can be properly small, and it is not needed to adsorb edges of the adhesive sheets 300 as much as possible. Therefore, the airflow distributors 31 and the suction assemblies 32 of the laying and applying apparatuses 3 can be properly manufactured to be smaller relative to the adhesive sheets 300.

In one embodiment, with reference to FIG. 7, one air chamber is an air chamber edge 3111, and the edge air chamber 3111 includes a first sub-chamber 31111 and a second sub-chamber 31112 which communicate with each other; the first sub-chamber 31111 extends in the first direction, the second sub-chamber 31112 extends in the second direction, and the first direction and the second direction are arranged in a crossed mode; the first direction and the second direction are both arranged in a mode of crossing with the arrangement directions of the airflow distributor 31 and the suction assembly 32; the air pumping connector communicating with the first sub-chamber 31111 is a first air pumping connector 3121, and the first air pumping connector 3121 is located at the end, deviating from the second sub-chamber 31112, of the first sub-chamber 31111 in the first direction; and the air pumping connector communicating with the second sub-chamber 31112 is a second air pumping connector 3122, and the second air pumping connector 3122 is located at the end, deviating from the first sub-chamber 31111, of the second sub-chamber 31112 in the second direction.

The first direction and the second direction are arranged in a crossed manner; the first direction and the second direction are both arranged in a manner of crossing with the arrangement directions of the airflow distributors 31 and the suction assemblies 32; the suction assemblies 32 adsorb the adhesive sheets 300 in the arrangement directions of the airflow distributors 31 and the suction assemblies 32 approximately; and the suction assemblies 32 can be adapted to adhesive sheets 300 with different sizes in the first direction and/or different sizes in the second direction.

By way of example, with reference to FIG. 6, the arrangement directions of the airflow distributors 31 and the suction assemblies 32 are arranged in the vertical direction approximately.

In the embodiment of the present invention, a suction force for the suction assemblies 32 to adsorb the adhesive sheets 300 is small, so the airflow distributors 31 and the suction assemblies 32 of the laying and applying apparatuses 3 can be properly manufactured to be small relative to the adhesive sheets 300; a depth of the first sub-chamber 31111 in the first direction and the depth of the second sub-chamber 31112 in the second direction are small, a negative pressure suction force at the end, deviating from the first air pumping connector 3121 in the first direction, of the first sub-chamber 31111 can still basically meet the suction force requirement for adsorbing the adhesive sheets 300, and the negative pressure suction force at the end, deviating from the second air pumping connector 3122 in the second direction, of the second sub-chamber 31112 can still basically meet the suction force requirement for adsorbing the adhesive sheets 300. A large space can be reserved between the first sub-chamber 31111 and the second sub-chamber 31112 which extend in a crossed mode in two different directions so as to arrange other air chambers, and thus the other air chambers can be approximately surrounded between the first sub-chamber 31111 and the second sub-chamber 31112.

In one embodiment, with reference to FIG. 7, and in all the air chambers, the air chambers except the edge air chamber 3111 are auxiliary air chambers; the auxiliary air chambers are positioned on the side, facing the second air pumping connector 3122, of the first sub-chamber 31111; and the auxiliary air chambers are positioned on the side, facing the first air pumping connector 3121, of the second sub-chamber 31112.

In the embodiment of the present invention, the air pumping connectors are located on outer side surfaces of the airflow distributors 31, and the arrangement directions of the airflow distributors 31 and the suction assemblies 32 are arranged in a manner of crossing with the orientations of the air pumping connectors; because the first sub-chamber 31111 and the second sub-chamber 31112 are arranged in a crossed manner, the auxiliary air chambers are located on the side, facing the second air pumping connector 3122, of the first sub-chamber 31111; the auxiliary air chambers are located on the side, facing the first air pumping connector 3121, of the second sub-chamber 31112; the air pumping connectors corresponding to the auxiliary air chambers are located on the side, facing the auxiliary air chamber, of the edge air chamber 3111; and the air pumping connectors are not arranged on the side, deviating from the auxiliary air chambers, of the edge air chamber 3111, so that the structures of the airflow distributors 31 are simplified, and the processing difficulty of the airflow distributors 31 is reduced.

The specific positions of the auxiliary air chambers in the embodiment of the present invention are not limited. By way of example, the auxiliary air chambers can be located on the side, deviating from the second air pumping connector 3122, of the first sub-chamber 31111. By way of example, the auxiliary air chambers can be located on the side, deviating from the first air pumping connector 3121, of the second sub-chamber 31112.

In one embodiment, with reference to FIG. 7, at least two auxiliary air chambers are provided, one auxiliary air chamber is a first auxiliary air chamber 3112, and the other auxiliary air chamber is a second auxiliary air chamber 3113; the second auxiliary air chamber 3113 is located on the side, deviating from the edge air chamber 3111, of the first auxiliary air chamber 3112; and the first auxiliary air chamber 3112 crosses the side of the second auxiliary air chamber 3113 in the first direction and the side of the second auxiliary air chamber 3113 in the second direction.

By way of example, with reference to FIG. 7, the air pumping connectors communicating with the auxiliary air chambers are a third air pumping connector 3133.

In the embodiment of the present invention, because the second auxiliary air chamber 3113 is located on the side, deviating from the edge air chamber 3111, of the first auxiliary air chamber 3112, and the first auxiliary air chamber 3112 crosses the side of the second auxiliary air chamber 3113 in the first direction and the side of the second auxiliary air chamber 3113 in the second direction, the first auxiliary air chamber 3112 and the second auxiliary air chamber 3113 are not completely shielded from each other in the first direction, the air exhaust connector corresponding to the first auxiliary air chamber 3112 and the air exhaust connector corresponding to the second air chamber can be formed in the surfaces of the sides of the airflow distributors 31 in the first direction, the first auxiliary air chamber 3112 and the second auxiliary air chamber 3113 are not completely shielded from each other in the second direction, and the air exhaust connector corresponding to the first auxiliary air chamber 3112 and the air exhaust connector corresponding to the second air chamber can be formed in the surfaces of the sides of the airflow distributors 31 in the second direction. Even under the condition that each air chamber communicates with at least two air exhaust connectors in different directions, the first auxiliary air chamber 3112 and the second auxiliary air chamber 3113 cannot be stacked in the vertical direction, namely, the projection area of the first auxiliary air chamber 3112 in the vertical direction and the projection area of the second auxiliary air chamber 3113 in the vertical direction do not coincide, so that the structures of the airflow distributors 31 can be simplified, and the machining difficulty can be reduced.

In one embodiment, with reference to FIG. 6 and FIG. 8, the suction assemblies 32 include suction nozzles 322 and protective blocks 323. The suction nozzles 322 are mounted on the airflow distributors 31, each air chamber communicates with the corresponding suction nozzle 322, and adsorption portions 321 are formed on the suction nozzles 322. The protective blocks 323 are connected to the sides, facing the suction nozzles 322, of the airflow distributors 31, the protective blocks 323 are provided with avoiding holes 3231, the avoiding holes 3231 penetrate through the protective blocks 323, the suction nozzles 322 are arranged in the avoiding holes 3231 in a penetrating mode, and the suction nozzles 322 partially protrude out of the sides, deviating from the airflow distributors 31, of the protective blocks 323.

In the embodiment of the present invention, the suction nozzles 322 are mounted on the airflow distributors 31, and when the air chambers are sucked into negative pressure, the corresponding suction nozzles 322 can adsorb the adhesive sheets 300 by the adsorption portions 321. The protective blocks 323 are connected to the sides, facing the suction nozzles 322, of the airflow distributors 31, the avoiding holes 3231 penetrate through the protective blocks 323, the suction nozzles 322 partially protrude out of the sides, deviating from the airflow distributors 31, of the protective blocks 323, and the suction nozzles 322 penetrating through the avoiding holes 3231 can penetrate through the protective blocks 323, thus facilitating the suction nozzles 322 to adsorb the adhesive sheet 300. An external lateral impact in a direction crossed with the vertical direction can be blocked by the protective blocks 323, and the protective blocks 323 block the lateral external impact to protect the suction nozzles 322 in the avoiding holes 3231, therefor, the influence of the lateral external impact on the suction nozzles 322 is reduced, and the suction nozzles 322 can adsorb the adhesive sheets 300 more stably.

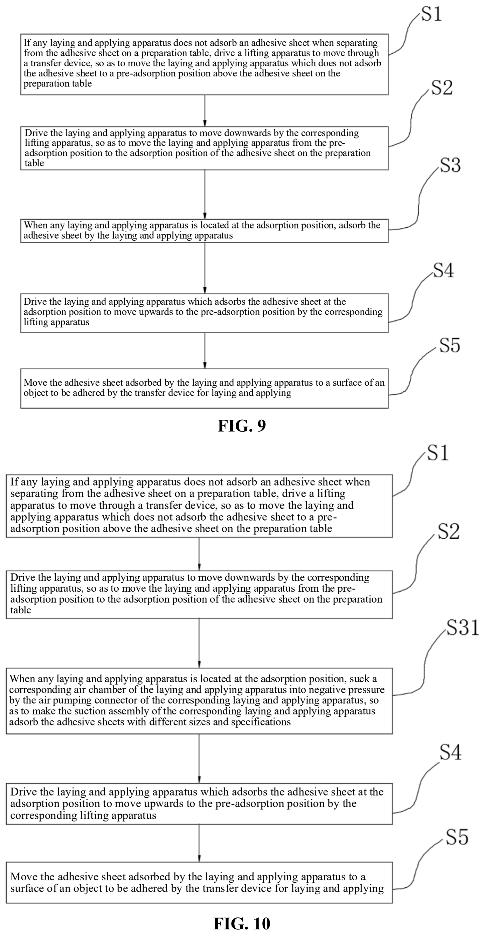

The embodiment of the present invention provides an adhesive applying method, with reference to FIG. 9, the adhesive applying method includes:
S1: if any laying and applying apparatus does not adsorb an adhesive sheet when separating from the adhesive sheet on a preparation table, driving a lifting apparatus to move through a transfer device, so as to move the laying and applying apparatus which does not adsorb the adhesive sheet to a pre-adsorption position above the adhesive sheet on the preparation table;
S2: driving the laying and applying apparatus to move downwards by the corresponding lifting apparatus, so as to move the laying and applying apparatus from the pre-adsorption position to the adsorption position of the adhesive sheet on the preparation table;
S3: when any laying and applying apparatus is located at the adsorption position, adsorbing the adhesive sheet by the laying and applying apparatus;
S4: driving the laying and applying apparatus which adsorbs the adhesive sheet at the adsorption position to move upwards to the pre-adsorption position by the corresponding lifting apparatus; and
S5: moving the adhesive sheet adsorbed by the laying and applying apparatus to a surface of an object to be adhered by the transfer device for laying and applying.

The corresponding laying and applying apparatus 3 is separated from the adhesive sheet 300 on the preparation table 200, namely, the corresponding laying and applying apparatus 3 is not in contact with the adhesive sheet 300 on the preparation table 200.

The laying and applying apparatus 3 is located at the pre-adsorption position above the adhesive sheet 300 on preparation table 200, and the laying and applying apparatus 3 located at the pre-adsorption position is not in contact with the adhesive sheet 300.

The laying and applying apparatus 3 is moved to the adsorption position of the adhesive sheet 300 on the preparation table 200, and the laying and applying apparatus 3 located at the adsorption position is in contact with the adhesive sheet 300.

By way of example, any laying and applying apparatus 3 is located at the adsorption position, and the corresponding laying and applying apparatus 3 can adsorb the adhesive sheets 300.

In the embodiment of the present invention, the lifting apparatuses 2 are driven to move by the transfer device 1, thus the laying and applying apparatuses 3 which do not adsorb the adhesive sheets 300 can move to the pre-adsorption position above the adhesive sheets 300 on the preparation table 200, and the pre-adsorption position defines the positions of the adhesive sheets 300 relative to the laying and applying apparatuses 3 in a plane perpendicular to the vertical direction. Because each lifting apparatus 2 independently drives the corresponding laying and applying apparatus 3 to lift up and down, the laying and applying apparatuses 3 are driven to move downwards by the corresponding lifting apparatuses 2, thus the laying and applying apparatuses 3 can move from the upper portions of the adhesive sheets 300 on the preparation table 200 to the adsorption positions of the adhesive sheets 300 on the preparation table 200, and the laying and applying apparatuses 3 adsorb the adhesive sheets 300 at the adsorption positions. After one laying and applying apparatus 3 adsorbs the adhesive sheets 300, there are other laying and applying apparatuses 3 that do not adsorb the adhesive sheets 300 when separating from the adhesive sheets 300 on the preparation table 200, so that the condition that any laying and applying apparatus 3 does not adsorb the adhesive sheets 300 when separating from the adhesive sheets 300 on the preparation table 200 is met; the transfer device 1 will drive the corresponding lifting apparatus 2 to move, thus the laying and applying apparatus 3 which does not adsorb the adhesive sheets 300 can move to the pre-adsorption position above the adhesive sheets 300 on the preparation table 200; the two pre-adsorption positions are different; the transfer device 1 can sequentially drive the corresponding lifting apparatuses 2 to move to change the pre-adsorption position, thereby adjusting the spacing between the adhesive sheets 300; the corresponding lifting apparatuses 2 drive the laying and applying apparatuses 3 to move downwards to the adsorption positions to adsorb the adhesive sheets 300 until all the laying and applying apparatuses 3 adsorb the adhesive sheets 300 when separating from the adhesive sheets 300 on the preparation table 200; and the transfer device 1 moves the adhesive sheets 300 adsorbed by the laying and applying apparatuses 3 to the surface of the object to be adhered for laying and applying. The lifting apparatuses 2 are driven to move by the transfer device, thus the spacing between the adhesive sheets 300 adsorbed by the plurality of laying and applying apparatuses 3 can be adjusted, the spacing between the adhesive sheets 300 corresponding to two single-row grouped battery cells and the spacing between the adhesive sheets 300 corresponding to two double-row grouped battery cells can both be met, and the laying and applying assembly is difficult to implement adhesive applying to surfaces of both single-row grouped battery cells and double-row grouped battery cells.

In one embodiment, with reference to FIG. 10, the when any laying and applying apparatus 3 is located at the adsorption position, adsorbing the adhesive sheet 300 by the laying and applying apparatus 3 includes:
S31: when any laying and applying apparatus is located at the adsorption position, sucking a corresponding air chamber of the laying and applying apparatus into negative pressure by the air pumping connector of the corresponding laying and applying apparatus, so as to make the suction assembly of the corresponding laying and applying apparatus adsorb the adhesive sheets with different sizes and specifications.

In the embodiment of the present invention, the sizes and specifications of the adhesive sheets 300 are different or the positions of the adhesive sheets 300 relative to the laying and applying apparatuses 3 are different, so the adsorption portions 321 covered by the adhesive sheets 300 will be different; and the air chambers corresponding to the adsorption portions 321 covered by the adhesive sheets 300 are sucked into negative pressure, so that the laying and applying apparatuses 3 can adsorb the adhesive sheets 300 with different sizes and specifications. For the adhesive sheet 300 with small sizes and specifications, the adhesive sheets 300 do not cover all the adsorption portions 321, the corresponding part of the air chambers are sucked into negative pressure, so that the adsorption requirement of the adhesive sheets 300 can be met, and the energy consumption can be reduced.

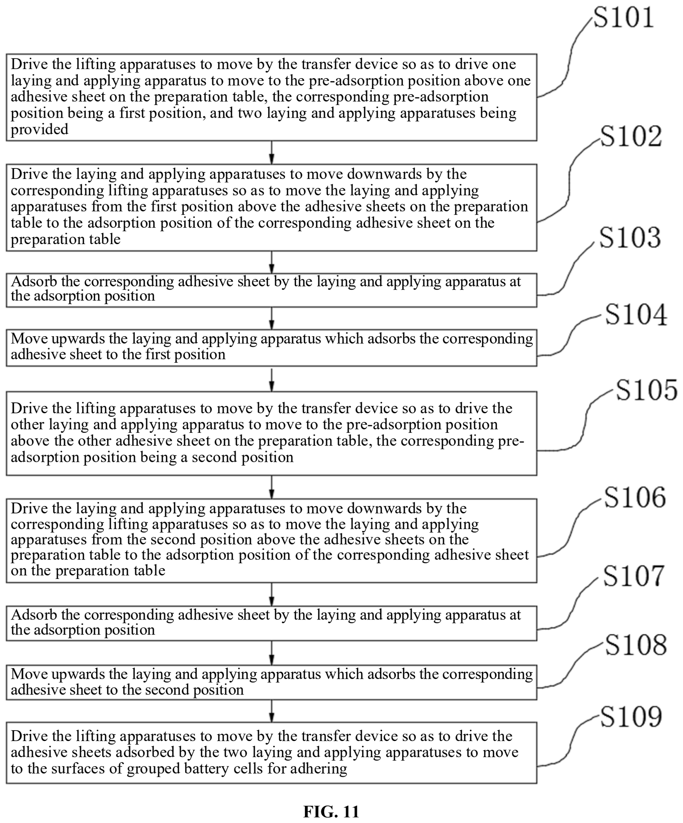

With reference to FIG. 11, the adhesive applying method will be described through the following embodiments.

S101: Drive the lifting apparatuses to move by the transfer device so as to drive one laying and applying apparatus to move to the pre-adsorption position above one adhesive sheet on the preparation table, the corresponding pre-adsorption position being a first position, and two laying and applying apparatuses being provided.

S102: Drive the laying and applying apparatuses to move downwards by the corresponding lifting apparatuses so as to move the laying and applying apparatuses from the first position above the adhesive sheets on the preparation table to the adsorption position of the corresponding adhesive sheet on the preparation table.

S103: Adsorb the corresponding adhesive sheet by the laying and applying apparatus at the adsorption position.

S104: Move upwards the laying and applying apparatus which adsorbs the corresponding adhesive sheet to the first position.

S105: Drive the lifting apparatuses to move by the transfer device so as to drive the other laying and applying apparatus to move to the pre-adsorption position above the other adhesive sheet on the preparation table, the corresponding pre-adsorption position being a second position.

S106: Drive the laying and applying apparatuses to move downwards by the corresponding lifting apparatuses so as to move the laying and applying apparatuses from the second position above the adhesive sheets on the preparation table to the adsorption position of the corresponding adhesive sheet on the preparation table.

S107: Adsorb the corresponding adhesive sheet by the laying and applying apparatus at the adsorption position.

S108: Move upwards the laying and applying apparatus which adsorbs the corresponding adhesive sheet to the second position.

S109: Drive the lifting apparatuses to move by the transfer device so as to drive the adhesive sheets adsorbed by the two laying and applying apparatuses to move to the surfaces of grouped battery cells for adhering.

It is to be understood that in step S101, the laying and applying apparatuses corresponding to the two lifting apparatuses do not adsorb the adhesive sheets.

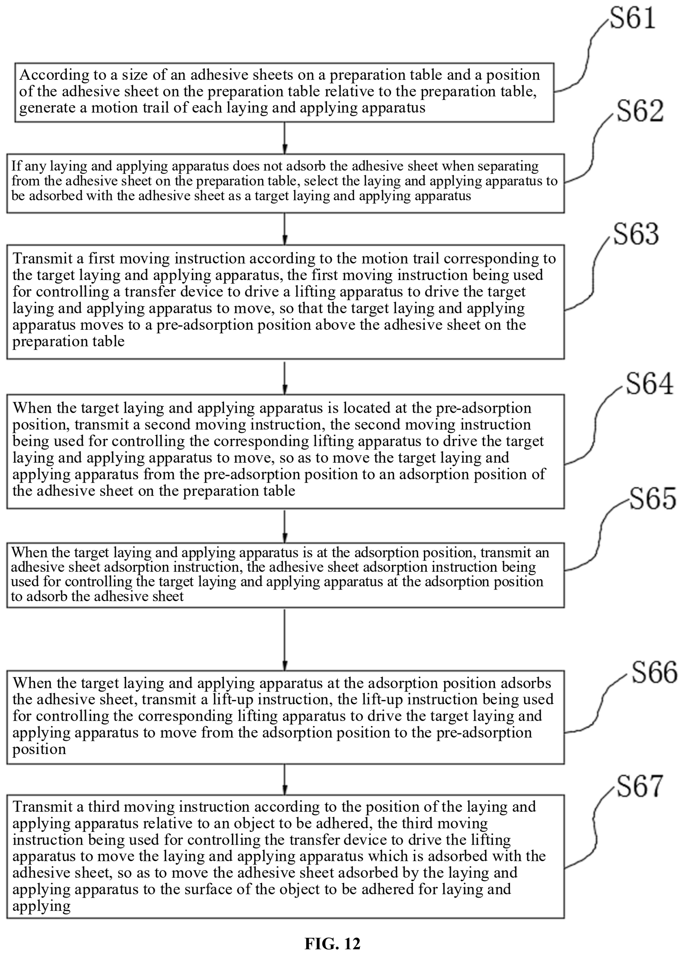

The embodiment of the present invention provides an adhesive applying method, with reference to FIG. 12, the adhesive applying method includes:
S61: according to a size of an adhesive sheet on a preparation table and a position of the adhesive sheet on the preparation table relative to the preparation table, generating a motion trail of each laying and applying apparatus;
S62: if any laying and applying apparatus does not adsorb the adhesive sheet when separating from the adhesive sheet on the preparation table, selecting the laying and applying apparatus to be adsorbed with the adhesive sheet as a target laying and applying apparatus;
S63: transmitting a first moving instruction according to the motion trail corresponding to the target laying and applying apparatus, the first moving instruction being used for controlling a transfer device to drive a lifting apparatus to drive the target laying and applying apparatus to move, so as to move the target laying and applying apparatus to a pre-adsorption position above the adhesive sheet on the preparation table;
S64: when the target laying and applying apparatus is located at the pre-adsorption position, transmitting a second moving instruction, the second moving instruction being used for controlling the corresponding lifting apparatus to drive the target laying and applying apparatus to move, so as to move the target laying and applying apparatus from the pre-adsorption position to an adsorption position of the adhesive sheet on the preparation table;
S65: when the target laying and applying apparatus is at the adsorption position, transmitting an adhesive sheet adsorption instruction, the adhesive sheet adsorption instruction being used for controlling the target laying and applying apparatus at the adsorption position to adsorb the adhesive sheet;
S66: when the target laying and applying apparatus at the adsorption position adsorbs the adhesive sheet, transmitting a lift-up instruction, the lift-up instruction being used for controlling the corresponding lifting apparatus to drive the target laying and applying apparatus to move from the adsorption position to the pre-adsorption position; and
S67: transmitting a third moving instruction according to the position of the laying and applying apparatus relative to an object to be adhered, the third moving instruction being used for controlling the transfer device to drive the lifting apparatus to move the laying and applying apparatus which is adsorbed with the adhesive sheet, so as to move the adhesive sheet adsorbed by the laying and applying apparatus to the surface of the object to be adhered for laying and applying.

The motion trail of each laying and applying apparatus 3 is a path through which the laying and applying apparatus 3 moves.

By way of example, a coordinate system is established, the motion trail of each laying and applying apparatus 3 takes an original point as an initial position, and each laying and applying apparatus 3 moves back to the original point after adsorbing the adhesive sheets 300.

By way of example, the motion trail of the following laying and applying apparatus 3 which is about to adsorb the adhesive sheets 300 takes the pre-adsorption position corresponding to the previous laying and applying apparatus 3 which finishes adsorbing the adhesive sheet 300 as an initial position, and each laying and applying apparatus 3 is lifted up to the corresponding pre-adsorption position after adsorbing the adhesive sheets 300.

By way of example, the sizes of adhesive sheets 300 corresponding to single-row grouped battery cells and the sizes of adhesive sheets 300 corresponding to double-row grouped battery cells are different, namely, the sizes of adhesive sheets 300 in different batches are different, and correspondingly, there is a difference between the spacing between two adhesive sheets 300 on the preparation table 200 corresponding to the single-row grouped battery cells and the spacing between two adhesive sheets 300 on the preparation table 200 corresponding to the double-row grouped battery cell. There is a difference between the path of the corresponding laying and applying apparatus 3 for adsorbing the adhesive sheets 300 corresponding to the single-row grouped battery cells and the path of the corresponding laying and applying apparatus 3 for adsorbing the adhesive sheets 300 corresponding to the double-row grouped battery cells.

The target laying and applying apparatus is driven to move from the adsorption position to the pre-adsorption position by the corresponding lifting apparatus 2, so that the laying and applying apparatus 3 is separated from the adhesive sheets 300 on the preparation table 200. It is to be noted that in this case, the adhesive sheets 300 adsorbed to the laying and applying apparatuses 3 are separated from the preparation table 200, and the adhesive sheets 300 adsorbed to the laying and applying apparatuses 3 do not belong to the adhesive sheets 300 on the preparation table 200.

By way of example, the method provided by the embodiment of the present invention is applied to a control apparatus.

In the embodiment of the present invention, the sizes of adhesive sheets 300 on the preparation table 200 and the positions of the adhesive sheets 300 on the preparation table 200 relative to the preparation table 200 are different, so the correspondingly generated motion trails corresponding to the laying and applying apparatuses 3 are different; each laying and applying apparatus 3 moves according to the generated motion trail to adsorb the corresponding adhesive sheets 300, so that the spacing between the two adhesive sheets 300 can be adjusted according to actual needs; the spacing between the two adhesive sheets 300 can be adjusted to meet the spacing between the adhesive sheets 300 corresponding to the single-row grouped battery cells and can also be adjusted to meet the spacing between the adhesive sheets 300 corresponding to the double-row grouped battery cells. Therefore, the laying and applying assembly can be better implement adhering to the adhesive sheets 300 corresponding to both the single-row grouped battery cells and the double-row grouped battery cells.

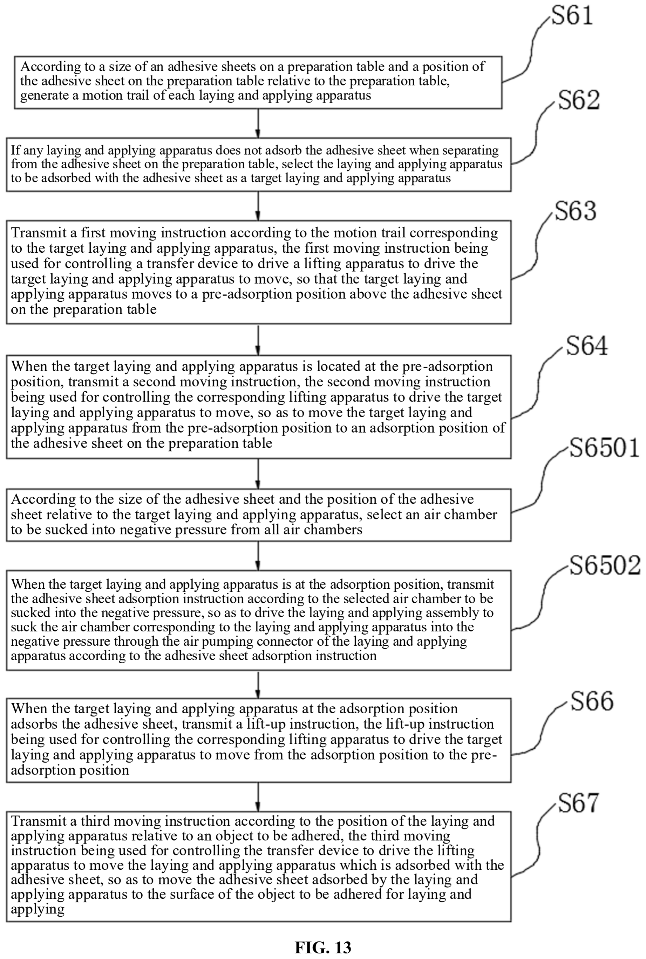

In one embodiment, with reference to FIG. 13, the when the target laying and applying apparatus is at the adsorption position, transmitting an adhesive sheet adsorption instruction, the adhesive sheet adsorption instruction being used for controlling the target laying and applying apparatus at the adsorption position to adsorb the adhesive sheet 300 includes:
S6501: according to the size of the adhesive sheet and the position of the adhesive sheet relative to the target laying and applying apparatus, selecting an air chamber to be sucked into negative pressure from all air chambers; and
S6502: when the target laying and applying apparatus is at the adsorption position, transmitting the adhesive sheet adsorption instruction according to the selected air chamber to be sucked into the negative pressure, so as to drive the laying and applying assembly to suck the air chamber corresponding to the laying and applying apparatus into the negative pressure through the air pumping connector of the laying and applying apparatus according to the adhesive sheet adsorption instruction.

The adsorption portions 321 covered by the adhesive sheets 300 are not only related to the sizes of the adhesive sheets 300, but also related to the positions of the adhesive sheets 300 relative to the target laying and applying apparatus, the adsorption portions 321 covered by the adhesive sheets 300 can be clearly determined through the sizes of the adhesive sheets 300 and the positions of the adhesive sheets 300 relative to the target laying and applying apparatus, and the air chambers corresponding to the adsorption portions 321 covered by the adhesive sheets 300 can be correspondingly clearly determined.

In the embodiment of the present invention, the air chambers to be sucked into negative pressure can be accurately selected through the sizes of the adhesive sheets 300 and the positions of the adhesive sheets 300 relative to the target laying and applying apparatus. The adhesive sheet adsorption instruction is obtained according to the selected air chambers to be sucked into negative pressure, and the laying and applying apparatuses 3 suck the corresponding air chambers into negative pressure by the air pumping connectors according to the adhesive sheet adsorption instruction. The air chambers to be sucked into negative pressure are flexibly selected according to the sizes and positions of the adhesive sheets 300; and for the adhesive sheets 300 with small sizes, the requirement of adsorbing the adhesive sheets 300 can be met by sucking part of the air chambers into negative pressure, and therefore, the energy consumption can be reduced.

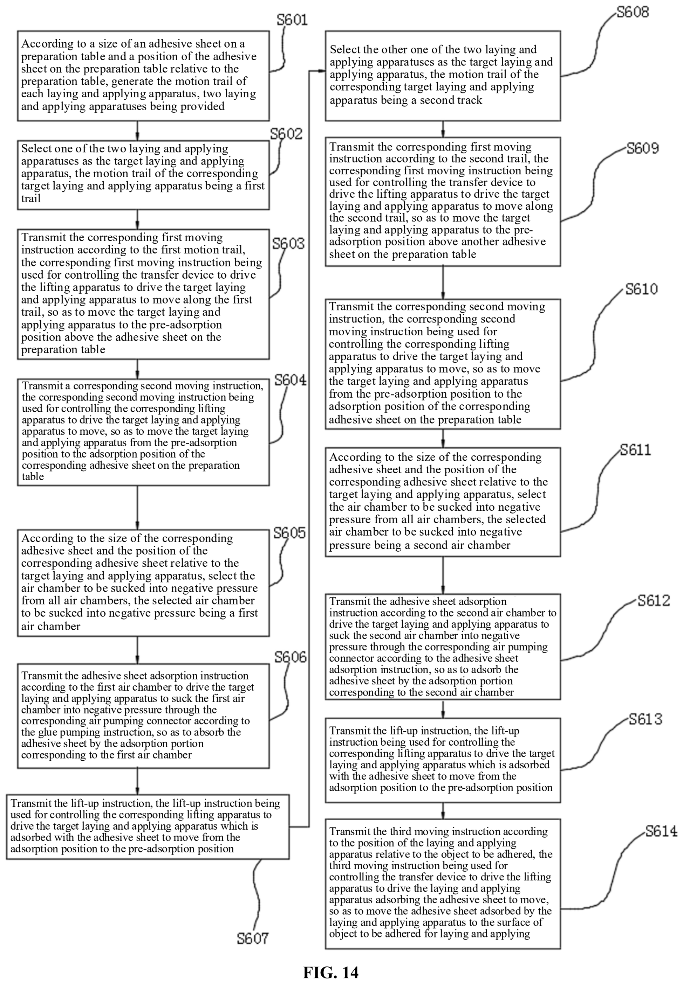

With reference to FIG. 14, the adhesive applying method is described through the following embodiment.

S601: according to a size of an adhesive sheet on a preparation table and a position of the adhesive sheet on the preparation table relative to the preparation table, generate the motion trail of each laying and applying apparatus, two laying and applying apparatuses being provided.

S602: Select one of the two laying and applying apparatuses as the target laying and applying apparatus, the motion trail of the corresponding target laying and applying apparatus being a first trail.

S603: Transmit the corresponding first moving instruction according to the first motion trail, the corresponding first moving instruction being used for controlling the transfer device to drive the lifting apparatus to drive the target laying and applying apparatus to move along the first trail, so as to move the target laying and applying apparatus to the pre-adsorption position above the adhesive sheet on the preparation table.

S604: Transmit a corresponding second moving instruction, the corresponding second moving instruction being used for controlling the corresponding lifting apparatus to drive the target laying and applying apparatus to move, so as to move the target laying and applying apparatus from the pre-adsorption position to the adsorption position of the corresponding adhesive sheet on the preparation table.

S605: According to the size of the corresponding adhesive sheet and the position of the corresponding adhesive sheet relative to the target laying and applying apparatus, select the air chamber to be sucked into negative pressure from all air chambers, the selected air chamber to be sucked into negative pressure being a first air chamber.

S606: Transmit the adhesive sheet adsorption instruction according to the first air chamber to drive the target laying and applying apparatus to suck the first air chamber into negative pressure through the corresponding air pumping connector according to the glue pumping instruction, so as to adsorb the adhesive sheet by the adsorption portion corresponding to the first air chamber.

S607: Transmit the lift-up instruction, the lift-up instruction being used for controlling the corresponding lifting apparatus to drive the target laying and applying apparatus which is adsorbed with the adhesive sheet to move from the adsorption position to the pre-adsorption position.

S608: Select the other one of the two laying and applying apparatuses as the target laying and applying apparatus, the motion trail of the corresponding target laying and applying apparatus being a second track.

S609: Transmit the corresponding first moving instruction according to the second trail, the corresponding first moving instruction being used for controlling the transfer device to drive the lifting apparatus to drive the target laying and applying apparatus to move along the second trail, so as to move the target laying and applying apparatus to the pre-adsorption position above another adhesive sheet on the preparation table.

S610: Transmit a corresponding second moving instruction, the corresponding second moving instruction being used for controlling the corresponding lifting apparatus to drive the target laying and applying apparatus to move, so as to move the target laying and applying apparatus from the pre-adsorption position to the adsorption position of the corresponding adhesive sheet on the preparation table.

S611: According to the size of the corresponding adhesive sheet and the position of the corresponding adhesive sheet relative to the target laying and applying apparatus, select the air chamber to be sucked into negative pressure from all air chambers, the selected air chamber to be sucked into negative pressure being a second air chamber.

S612: Transmit the adhesive sheet adsorption instruction according to the second air chamber to drive the target laying and applying apparatus to suck the second air chamber into negative pressure through the corresponding air pumping connector according to the adhesive sheet adsorption instruction, so as to adsorb the adhesive sheet by the adsorption portion corresponding to the second air chamber.

S613: Transmit the lift-up instruction, the lift-up instruction being used for controlling the corresponding lifting apparatus to drive the target laying and applying apparatus which is adsorbed with the adhesive sheet to move from the adsorption position to the pre-adsorption position.

S614: transmitting a third moving instruction according to the position of the laying and applying apparatus relative to an object to be adhered, the third moving instruction being used for controlling the transfer device to drive the lifting apparatus to move the laying and applying apparatus which is adsorbed with the adhesive sheet, so as to move the adhesive sheet adsorbed by the laying and applying apparatus to the surface of the object to be adhered for laying and applying.

The above embodiments are only used for illustrating the technical solutions of the present invention, and are not limited to them; although the present invention has been described in detail with reference to the foregoing embodiments, those of ordinary skill in the art should understand that it may still modify the technical solutions described in the foregoing embodiments, or replace some or all of the technical features therein; these modifications or substitutions do not make the essence of the corresponding technical solutions out of the scope of the technical solutions of each embodiment of the present invention, and they shall be covered within the scope of the present invention. In particular, as long as there are no structural conflicts, the technical features mentioned in the individual embodiments can be combined in any way.

### Industrial applicability

According to the embodiments of the present invention, a plurality of lifting apparatuses are arranged, each lifting apparatus is correspondingly provided with the laying and applying apparatus, and each lifting apparatus can drive the corresponding laying and applying apparatus to lift and down. When the grouped battery cells are the single-row grouped battery cells, the transfer device can drive the lifting apparatuses to move to corresponding positions, the corresponding lifting apparatus will drive the corresponding laying and applying apparatus to move downwards to adsorb one adhesive sheet on the preparation table, the corresponding lifting apparatus will drive the laying and applying apparatus which is adsorbed with the adhesive sheet to lift up, a rotating device will drive the lifting apparatus corresponding to the laying and applying apparatus which do not adsorb the adhesive sheet to move to another corresponding position, and the corresponding lifting apparatus will drive the corresponding laying and applying apparatus to move downwards to adsorb another adhesive sheet on the preparation table, therefore, the spacing between the two adsorbed adhesive sheets meets the spacing requirement on the adhesive sheets corresponding to the single-row grouped battery cells. When the grouped battery cells are the double-row grouped battery cells, the transfer device will drive the lifting apparatuses to move to corresponding positions, the corresponding lifting apparatus will drive the corresponding laying and applying apparatus to move downwards to adsorb one adhesive sheet on the preparation table, the corresponding lifting apparatus will drive the laying and applying apparatus which is adsorbed with the adhesive sheet to lift up, the rotating device will drive the lifting apparatus corresponding to the laying and applying apparatuses which do not adsorb the adhesive sheet to move to another corresponding position, and the corresponding lifting apparatus will drive the corresponding laying and applying apparatus to move downwards to adsorb another adhesive sheet on the preparation table, and therefore, the spacing between the two adsorbed adhesive sheets meets the spacing requirement on the adhesive sheets corresponding to the double-row grouped battery cells. Because the lifting apparatuses can drive corresponding laying and applying apparatuses to lift up and down respectively, after the corresponding laying and applying apparatus is lifted up and down to adsorb a first adhesive sheet, the rotating device drives the lifting apparatus to move to adjust the spacing between the adhesive sheet to be adsorbed and the adsorbed adhesive sheet, thus the spacing between the two adhesive sheets meets the spacing requirement on the adhesive sheets corresponding to grouped battery cells, and then the corresponding laying and applying apparatus is lifted up and down to adsorb the adhesive sheet to be adsorbed with the adjusted spacing. Therefore, the adhesive sheets required by both the single-row grouped battery cells and double-row grouped battery cells can be adsorbed from the preparation table by the laying and applying assembly according to a proper spacing, thereby better implementing adhesive applying to surfaces of both the single-row grouped battery cells and double-row grouped battery cells.

## Claims

1. A laying and applying assembly, comprising:
a transfer device;
lifting apparatuses arranged on the transfer device, the transfer device being configured to drive the lifting apparatuses to move, and a plurality of lifting apparatuses being provided; and
laying and applying apparatuses configured to adsorb adhesive sheets, each lifting apparatus being correspondingly provided with a laying and applying apparatus, and each lifting apparatus being configured to drive the corresponding laying and applying apparatus to lift up and down.

2. The laying and applying assembly according to claim 1, wherein the laying and applying apparatuses are located at bottom portions of the corresponding lifting apparatuses.

3. The laying and applying assembly according to claim 1 or 2, wherein each laying and applying apparatus comprises:
an airflow distributor having a plurality of air chambers and air pumping connectors, the plurality of air chambers being isolated from one another, and each air chamber communicating with the corresponding air pumping connector; and
a suction assembly which is connected to the airflow distributor and is provided with an adsorption portion configured to adsorb the adhesive sheet, the adsorption portion being located on the side, deviating from the airflow distributor, of the suction assembly, and each air chamber communicating with the corresponding adsorption portion.

4. The laying and applying assembly according to claim 3, wherein the air pumping connectors are located on outer side surfaces of the airflow distributors, and the arrangement directions of the airflow distributors and the suction assemblies are crossed with the orientations of the air pumping connectors.

5. The laying and applying assembly according to claim 4, wherein each air chamber communicates with at least two air pumping connectors in different orientations.

6. The laying and applying assembly according to claim 5, wherein one of air chambers is an edge air chamber, and the edge air chamber comprises a first sub-chamber and a second sub-chamber which are in communication with each other; the first sub-chamber extends in a first direction, the second sub-chamber extends in a second direction, and the first direction and the second direction are arranged in a crossed mode; the first direction and the second direction are both arranged in a mode of being crossed with the arrangement directions of the airflow distributors and the suction assemblies; the air pumping connector communicating with the first sub-chamber is a first air pumping connector, and the first air pumping connector is located at the end, deviating from the second sub-chamber in the first direction, of the first sub-chamber; the air pumping connector communicating with the second sub-chamber is a second air pumping connector, and the second air pumping connector is located at the end, deviating from the first sub-chamber in the second direction, of the second sub-chamber.

7. The laying and applying assembly according to claim 6, wherein in all the air chambers, the air chambers except the edge air chamber are auxiliary air chambers; the auxiliary air chambers are located on the side, facing the second air pumping connector, of the first sub-chamber; and the auxiliary air chambers are located on the side, facing the first air pumping connector, of the second sub-chamber.

8. The laying and applying assembly according to claim 7, wherein at least two auxiliary air chambers are provided, one of the auxiliary air chambers is a first auxiliary air chamber, and the other auxiliary air chamber is a second auxiliary air chamber; the second auxiliary air chamber is located on the side, deviating from the edge air chamber, of the first auxiliary air chamber; and the first auxiliary air chamber crosses the side of the second auxiliary air chamber in the first direction and the side of the second auxiliary air chamber in the second direction.

9. The laying and applying assembly according to any one of claims 3 to 8, wherein the suction assemblies comprise:
suction nozzles installed on the airflow distributor, each air chamber communicating with the corresponding suction nozzle, and the adsorption portions being formed on the suction nozzles; and
protective blocks which are connected to the sides, facing the suction nozzles, of the airflow distributors and are provided with avoiding holes, the avoiding holes penetrating through the protective blocks, the suction nozzles being arranged in the avoiding holes in a penetrating mode, and the suction nozzles partially protruding out of the sides, deviating from the airflow distributors, of the protective blocks.

10. An adhesive applying method, comprising:
if any laying and applying apparatus does not adsorb an adhesive sheet when separating from the adhesive sheet on a preparation table, driving a lifting apparatus to move through a transfer device, so as to move the laying and applying apparatus which does not adsorb the adhesive sheet to a pre-adsorption position above the adhesive sheet on the preparation table;
driving the laying and applying apparatus to move downwards by the corresponding lifting apparatus, so as to move the laying and applying apparatus from the pre-adsorption position to the adsorption position of the adhesive sheet on the preparation table;
when any laying and applying apparatus is located at the adsorption position, adsorbing the adhesive sheet by the laying and applying apparatus;
driving the laying and applying apparatus which adsorbs the adhesive sheet at the adsorption position to move upwards to the pre-adsorption position by the corresponding lifting apparatus; and
moving the adhesive sheet adsorbed by the laying and applying apparatus to a surface of an object to be adhered by the transfer device for laying and applying.

11. The adhesive applying method according to claim 10, wherein when any laying and applying apparatus is located at the adsorption position, adsorbing the adhesive sheet by the laying and applying apparatus comprises:
when any laying and applying apparatus is located at the adsorption position, sucking a corresponding air chamber of the laying and applying apparatus into negative pressure by an air pumping connector of the corresponding laying and applying apparatus, so as to make a suction assembly of the corresponding laying and applying apparatus adsorb adhesive sheets with different sizes and specifications.

12. An adhesive applying method, comprising:
according to a size of an adhesive sheet on a preparation table and a position of the adhesive sheet on the preparation table relative to the preparation table, generating a motion trail of each laying and applying apparatus;
if any laying and applying apparatus does not adsorb the adhesive sheet when separating from the adhesive sheet on the preparation table, selecting the laying and applying apparatus to be adsorbed with the adhesive sheet as a target laying and applying apparatus;
transmitting a first moving instruction according to the motion trail corresponding to the target laying and applying apparatus, the first moving instruction being used for controlling a transfer device to drive a lifting apparatus to drive the target laying and applying apparatus to move, so as to move the target laying and applying apparatus to a pre-adsorption position above the adhesive sheet on the preparation table;
when the target laying and applying apparatus is located at the pre-adsorption position, transmitting a second moving instruction, the second moving instruction being used for controlling the corresponding lifting apparatus to drive the target laying and applying apparatus to move, so as to move the target laying and applying apparatus from the pre-adsorption position to an adsorption position of the adhesive sheet on the preparation table;
when the target laying and applying apparatus is at the adsorption position, transmitting an adhesive sheet adsorption instruction, the adhesive sheet adsorption instruction being used for controlling the target laying and applying apparatus at the adsorption position to adsorb the adhesive sheet;
when the target laying and applying apparatus at the adsorption position adsorbs the adhesive sheet, transmitting a lift-up instruction, the lift-up instruction being used for controlling the corresponding lifting apparatus to drive the target laying and applying apparatus to move from the adsorption position to the pre-adsorption position; and
transmitting a third moving instruction according to the position of the laying and applying apparatus relative to an object to be adhered, the third moving instruction being used for controlling the transfer device to drive the lifting apparatus to move the laying and applying apparatus which is adsorbed with the adhesive sheet, so as to move the adhesive sheet adsorbed by the laying and applying apparatus to the surface of the object to be adhered for laying and applying.

13. The adhesive applying method according to claim 12, wherein when the target laying and applying apparatus is at the adsorption position, transmitting an adhesive sheet adsorption instruction, the adhesive sheet adsorption instruction being used for controlling the target laying and applying apparatus at the adsorption position to adsorb the adhesive sheet comprises:
according to the size of the adhesive sheet and the position of the adhesive sheet relative to the target laying and applying apparatus, selecting an air chamber to be sucked into negative pressure from all air chambers; and
when the target laying and applying apparatus is at the adsorption position, transmitting the adhesive sheet adsorption instruction according to the selected air chamber to be sucked into the negative pressure, so as to drive the laying and applying assembly to suck the air chamber corresponding to the laying and applying apparatus into the negative pressure through the air pumping connector of the laying and applying apparatus according to the adhesive sheet adsorption instruction.

14. A battery production line, comprising:
the laying and applying assembly according to any one of claims 1 to 9;
a preparation table configured to store adhesive sheets to be applied, the laying and applying apparatus being configured to adsorb the adhesive sheets on the preparation table; and
a conveying apparatus, configured to convey grouped battery cells, the transfer device driving the lifting apparatus to move to drive the laying and applying apparatus to apply the adsorbed adhesive sheets to the battery cells on the conveying apparatus.
